# EUROPEAN PATENT SPECIFICATION

(11) **EP 1 113 649 B1**
(45) Date of publication and mention of the grant of the patent: **13.09.2006**
(21) Application number: 00311627.4
(22) Date of filing: 22.12.2000
(51) Int. Cl.: H04L 29/12, H04Q 7/32, H04L 29/06, H04Q 7/38

(54) **Packet communication method, node apparatus and packet communication system**
Paketübertragungsverfahren, Knotenvorrichtung und Paketübertragungssystem
Procédé de communication de paquets, appareil de noeud et système de communication de paquets

(30) Priority: 27.12.1999 JP 37159799
(43) Date of publication of application: 04.07.2001
(73) Proprietor: NTT DoCoMo, Inc., Tokyo 100-6150 (JP)
(72) Inventor: Suzuki, Yoshifumi, Kanagawa 238-0315 (JP); Shinozaki, Takuya, Kanagawa 239-0847 (JP); Okajima, Ichiro, Yokohama-shi, Kanagawa 236-0032 (JP); Umeda, Narumi, Yokohama-shi, Kanagawa 236-0032 (JP)
(74) Representative: Luckhurst, Anthony Henry William

(56) References cited:
- EP-A- 0 578 041
- PERKINS C E: "MOBILE IP" , IEEE COMMUNICATIONS MAGAZINE, IEEE SERVICE CENTER. PISCATAWAY, N.J, US, VOL. 35, NR. 5, PAGE(S) 84-86,91-99 XP000657114 ISSN: 0163-6804 * abstract * * page 84, column 2 - page 85, column 1 * * page 92, column 2 - page 96, column 1 *
- PERKINS C: "Minimal Encapsulation within IP;RFC2004" INTERNET, October 1996 (1996-10), XP002137013 Retrieved from the Internet: <URL:http://www.ietf.org/rfc/rfc2004> [retrieved on 2000-05-04]
- VALKO A G: "CELLULAR IP: A NEW APPROACH TO INTERNET HOST MOBILITY" COMPUTER COMMUNICATIONS REVIEW, ASSOCIATION FOR COMPUTING MACHINERY. NEW YORK, US, vol. 29, no. 1, January 1999 (1999-01), pages 50-65, XP000823873 ISSN: 0146-4833
- RAMJEE R ET AL: "HAWAII: a domain-based approach for supporting mobility in wide-area wireless networks" IEEE, 31 October 1999 (1999-10-31), pages 283-292, XP010356967
- COHE D ET AL: "IP addressing and routing in a local wireless network" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, vol. 2 CONF. 11, 4 May 1992 (1992-05-04), pages 626-632, XP010062192 ISBN: 0-7803-0602-3

## Description

### BACKGROUND OF THE INVENTION

### 1. Field of the Invention

The present invention relates to a packet communication method, a node apparatus and a packet communication system.

### 2. Description of the Related Art

In the related art, an IP address is fixed for each host, and cannot adapt to a movement of the host. If an address is given for each movement of the host, the IP address is frequently changed, and, thereby, a traffic increases. Further, if the IP address is frequently changed, a case where the address of a mobile terminal cannot be obtained may occur, thereby other terminal cannot recognize the change in IP address, and cannot perform communication therewith.

In order to solve such a problem, it can be considered that a packed is changed into a capsule using a new address each time a host moves.

Encapsulation and tunnelling is described for example in XP000657114: "Mobile IP", Perkins C.E, IEEE Communications Magazine, May 1997 and in XP2137013: "RFC 2004: Minimal Encapsulation within IP". Further information as background is available from EP-A-0578041, XP000823873: "Cellular IP: A New Approach to Internet Host Mobility", Valko A.G., Computer Communications Review, January 1999, XP10356967: "Hawaii: A Domain-based Approach for Supporting Mobility in Wide-area Wireless Networks", Ranjee R., 1999 IEEE, and XP10062192: "IP Addressing and Routing in a Local Wireless Network", Cohe D, INFOCOM 1992.

In such prior systems, a destination address of a packet is changed, in a transmitting terminal, in response to a notification from a gateway.

However, with encapsulation systems, when a movement of host is made frequently, a load of a home station or the like increases because a time is required for changing the packet into a capsule and returning the capsule into the original packet.

Further, when an address of the other end of transmission is not known at a time of starting communication, it is necessary to transmit and receive a packet for inquiring the destination address. In such a case, a large time is required for transmitting the initial packet to the other end.

Furthermore, when a movement of a host is made frequently, packets for control generated together with address change increase, and, thereby, the traffic of information packets is suppressed.

### SUMMARY OF THE INVENTION

The present invention has been devised in consideration of the above-mentioned problems, and comprises a method, and system as defined in Claims 1 and 4 respectively. With the benefit of the invention, also, even when a repeating node is , switched during communication, it is not necessary for a host to change an IP address, and it is possible to continue the communication only by path control or routing control.

Even when the base station, which the moving station belongs to, changes, no increase in the path control traffic is required.

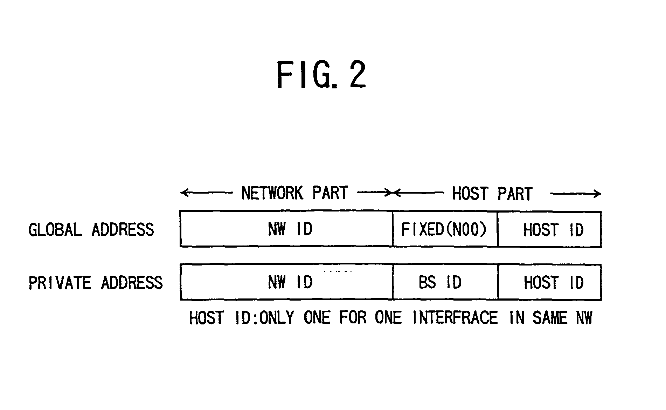

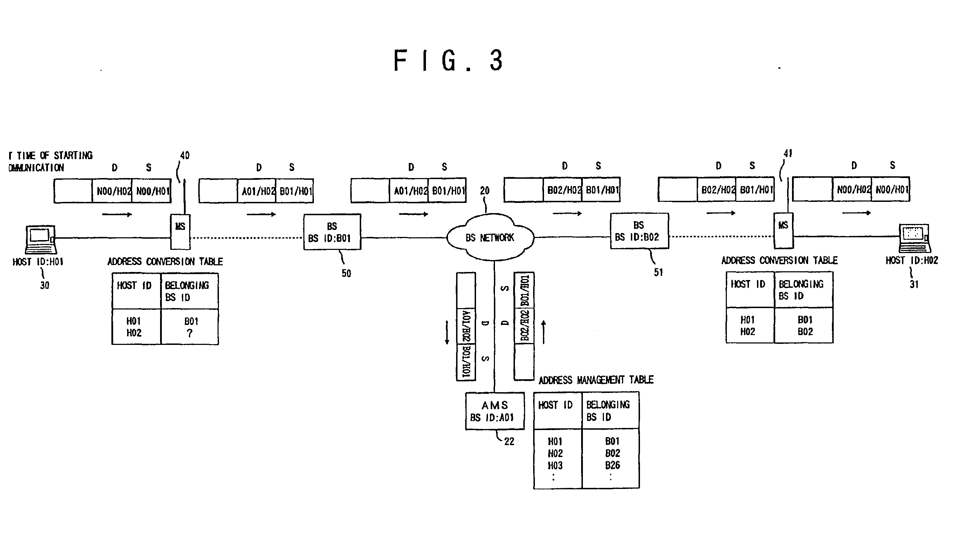

A preferred embodiment of the invention involves:
a) making a predetermined number of bits of the transmission-source address and a predetermined number of bits of destination address be fixed addresses (for example, FIXED (N00), in FIG. 2);
b) a repeating node (for example, a mobile station 40, shown in FIG. 3), which repeats a packet from a transmission-source terminal (for example, a host computer 30, shown in FIG. 3) first, converting the fixed address of the transmission-source address of the received packet into an address (for example, B01, shown in FIG. 3) of a higher-rank station (for example, a base station 50, shown in FIG. 3) of the above-mentioned repeating node; and
c) the above-mentioned repeating node converting the fixed address of the destination address of the received packet into an address (for example, B02, shown in FIG. 3) of a higher-rank station (for example, a base station 51, shown in FIG. 3) of a last repeating node (for example, a mobile station 41, shown in FIG. 3) for a destination terminal (for example, a host computer 31, shown in FIG. 3), and transferring the packet.

The repeating node, which repeats the packet from the transmission-source terminal first, may convert the fixed address of the destination address of the received packet into an address (for example, A01, shown in FIG. 3) of a node (for example, an address management server 22, shown in FIG. 3) having a table of an address of a higher-rank station of a last repeating node for each terminal, when the address of the higher-rank station of the last repeating node for the destination terminal is not known, and transfers the packet.

The node having the table of the address of the higher-rank station of the last repeating node for each terminal may convert the own address in the destination address of the received packet into the address of the higher-rank station of the last repeating node for the destination terminal, and transfer the packet.

The higher-rank station of the repeating node, which repeats the packet from the transmission-source terminal first, may transfer the received packet without changing the transmission-source address, when the address of the higher-rank station in the transmission-source address of the received packet coincides with the address of the own station, and convert the address of the higher-rank station in the transmission-source address of the received packet into the address of the own station, when the address of the higher-rank station in the transmission-source address of the received packet does not coincide with the address of the own station, and transfer the packet.

The higher-rank station of the repeating node, which repeats the packet from the transmission-source terminal first, may further instruct the higher-rank station having the transmission-source address written in the received packet to transfer a packet addressed to the above-mentioned transmission-source terminal to the own station, when the address of the higher-rank station in the transmission-source address of the received packet does not coincide with the address of the own station, and
further instruct the node having the table of the address of the higher-rank station of the last repeating node for each terminal to update the table.

The higher-rank station of the last repeating node for the destination terminal may transfer the received packet without changing the destination address when the address of the higher-rank station in the destination address of the received packet coincides with the address of the own station and no transfer instructions are given for the destination terminal, and
convert the address of the higher-rank station of the destination address of the received packet into an address of a higher-rank station of the destination of the thus-instructed transfer, when the address of the higher-rank station in the destination address of the received packet coincides with the address of the own station and transfer instructions are given for the destination terminal, and transfer the packet.

The higher-rank station of the last repeating node for the destination terminal may transfer the packet, when the address of the higher-rank station in the destination address of the received packet does not coincide with the address of the own station.

The last repeating node for the destination terminal may convert the addresses of the higher-rank stations in the transmission-source address and destination address of the received packet into the fixed addresses, and transfer the packet to the destination terminal.

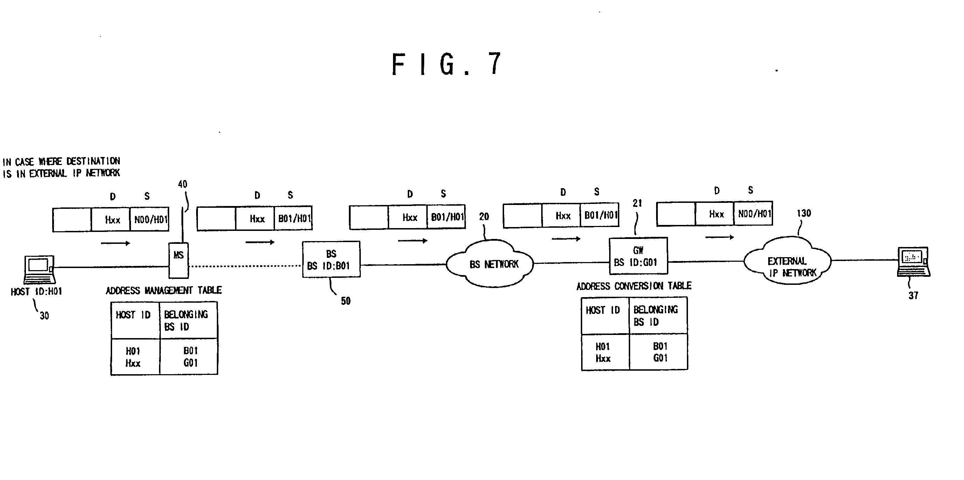

In a case where the destination terminal belongs to another network (for example, an external IP network 130, shown in FIG. 7),
the transmission-source terminal may transmit the packet having an address given to the destination terminal as the destination address thereof;
the repeating node, which repeats the packet from the transmission-source terminal first, may convert the fixed address in the transmission-source address of the received packet into the address of the higher-rank station of the repeating node, and transfer the packet to a gateway station (for example, a gateway station 21, shown in FIG. 7) which provides an interface with the other network; and
the gateway station may convert the address of the higher-rank station of the received packet into the fixed address, and transfer the packet into the other network.

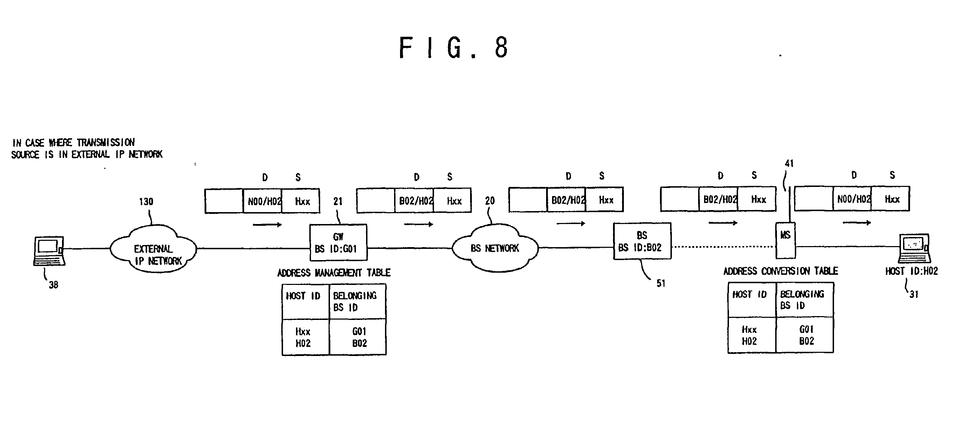

In a case where the transmission-source terminal belongs to another network (for example, an external IP network 130, shown in FIG. 8),
the transmission-source terminal may transmit a packet having an address given to the destination terminal as the destination address thereof; and
a gateway station (for example, a gateway station 21, shown in FIG. 8) which provides an interface with the other network may convert the fixed address in the destination address of the received packet into the address of the higher-rank station of the last repeating node for the destination terminal, and transfer the packet.

According to the present invention, it is possible to perform movement control of a mobile station only by path control or routing control in a base station network.

Further, even when a base station to which a terminal belongs is switched due to a movement or change in radio propagation condition, a traffic of path-control or routing-control information in a base station network does not increase.

Furthermore, it is possible to prevent a packet from being discarded due to destination of transfer being unknown due to a movement of a mobile station.

Further, an address of a mobile host is not changed even at a receiving side.

Further, even when a mobile station changes a base station to which the mobile station belongs during communication, it is not necessary to specially transmit a control packet for reporting the change of the base station to which the mobile station belongs.

Further, even when a repeating node is changed during communication, it is possible to continue the communication only by path control or routing control without changing an IP address at a host.

Other objects and further features of the present invention will become more apparent from the following detailed description when read in conjunction with the accompanying drawings.

### BRIEF DESCRIPTION OF THE DRAWINGS

FIG. 1 illustrates a packet mobile radio communication system;
FIG. 2 illustrates a configuration of an address of a packet according to the present invention;
FIG. 3 illustrates a communication procedure at a time of starting communication;
FIG. 4 illustrates a communication procedure of normal communication;
FIG. 5 illustrates a communication procedure in a case where a base station to which a transmission-source host belongs is switched to another base station;
FIG. 6 illustrates a communication procedure in a case where a base station to which a destination host belongs is switched to another base station;
FIG. 7 illustrates a communication procedure in a case where a destination of transmission is in an external IP network;
FIG. 8 illustrates a communication procedure in a case where a transmission source is in an external IP network; and
FIG. 9 shows a block diagram of each of mobile stations, base stations, address management station and gateway station shown in FIGS. 1, 3 through 8.

### DETAILED DESCRIPTION OF THE PREFERRED EMBODIMENT

An embodiment of the present invention will now be described with reference to figures.

The description will be made for an example of a packet mobile radio communication system.

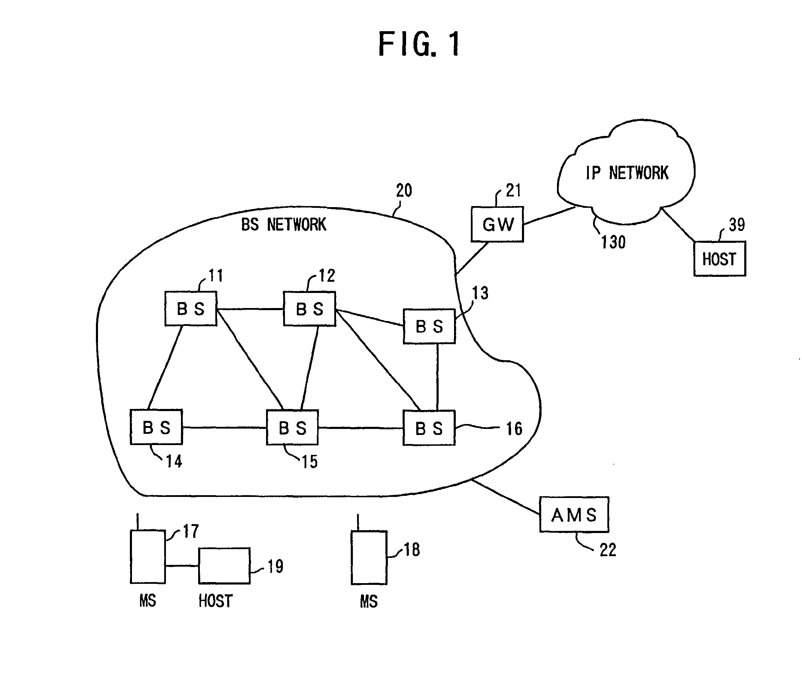

The packet mobile radio communication system in the example has a configuration shown in FIG. 1.

As shown in FIG. 1, the packet mobile communication system includes a mobile station (MS) 17, another mobile station 18, a terminal (HOST: host computer) 19, a base station network (BS network) 20, a gateway station (GW) 21 for providing an interface with another network, an address management server (AMS) 22, the IP network 130, and another terminal (HOST: host computer) 39 of the IP network 130. The base station network 20 includes, for example, base stations (BS) 11 through 16.

One or a plurality of terminals (host computers: host) are connected to one mobile station. The address management server (AMS) 22 manages the number (host ID) special to each host and the number (base station ID) special to a base station to which a mobile station to which the host is connected belongs. The address management server 22 has an address management table which is a table of each host ID and the base station ID of the base station to which the host is connected via the mobile station. Further, the gateway station 21 provides an interface with another network (the IP network 130), and has an address management table, same as the address management server 22.

FIG. 2 shows a configuration of an address according to the present invention.

The address includes a network part and a host part. The network part is an address special to a network.

The address of the host part is a combination of an address (host ID) special to the host and an certain fixed address (FIXED: N00). In a mobile station, the part of the fixed address is replaced by a base station ID of the base station to which the mobile station belongs (base station ID field).

In description of the embodiment of the present invention which will now be described, each mobile host belonging to a communication network is registered to the address management server at a time of starting up of the mobile station or at a time of releasing from a sleep state, and, at a time of starting communication, a host of transmission source knows the ID of the base station to which the host belongs. Further, in the address management server, the correspondences in ID between the mobile hosts belonging to the communication network and the base stations to which the hosts belong are updated into the latest ones.

### 1. First, a case where a destination host is included in the same communication network will now be described.

### (1) At a time of starting communication

A communication procedure at a time of starting communication will now be described with reference to FIG. 3.

A case will now be described where a packet is transmitted from a host 30 having a host ID of H01 connected to a mobile station 40 belonging to a base station 50 having a base station ID of B01 to a host 31 having a host ID of H02 connected to a mobile station 41 belonging to a base station 51 having a base station ID of B02.
① A packet having the transmission-source address and the destination address of N00/H01 and N00/H02 is transmitted from the host 30.
② The mobile station 40 replaces the base station ID field of the transmission-source address with the address B01 of the base station 50 to which the mobile station 40 belongs. Because the ID of the base station 51 to which the host 31 of the destination belongs is not known, the mobile station 40 replaces the base station ID field with A01 which is the ID of the address management server 22. Then, the mobile station 40 transfers the thus-obtained packet into the base station network 20.
③ In the base station network 20, the packet is transferred to the address management server 22 having the address A01 which is the destination node of the packet. The address management server 22 refers to the address management table, and replaces the base station ID field of the destination address with B02 which is the address of the base station 51 to which the host 31 belongs. Then, the address management server 22 transfers the thus-obtained packet into the base station network 20.
④ The mobile station 41 receives the packet transferred by the address management server 22 via the destination base station 51 (B02). Further, the mobile station 41 knows from the transmission-source address of the received packet that the base station ID of the base station to which the host 30 (H01) belongs is B01. Then, the mobile station 41 stores it in an address conversion table of the own station.
⑤ Further, the mobile station 41 replaces the base station ID field of each of the transmission-source address and destination address with N00, and transmits the thus-obtained packet to the host 31 (H02).

Thereby, according to the present invention, it is possible to transfer the packet from the management server without executing processes of inquiring the address of a host of the other end and receiving the answer thereto.

### (2) Normal Communication

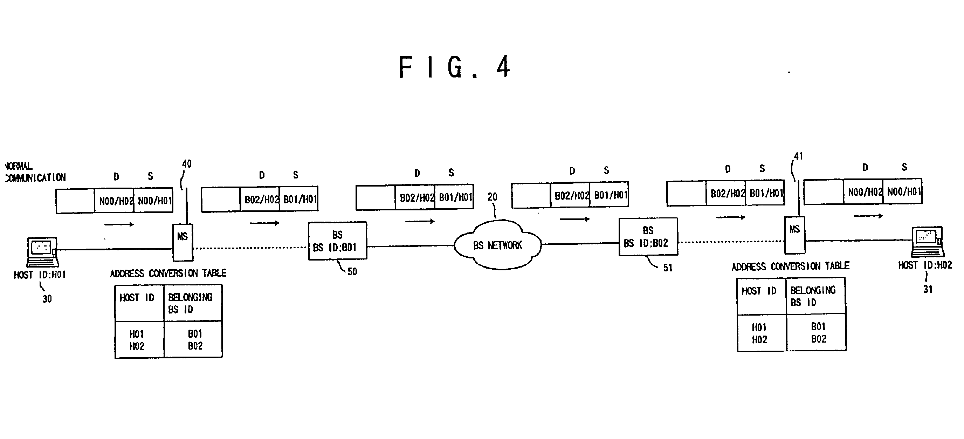

A communication procedure of normal communication will now be described with reference to FIG. 4.

A case will now be described where a packet is transmitted from the host 30 having the host ID of H01 connected to the mobile station 40 belonging to the base station 50 having the base station ID of B01 to the host 31 having the host ID of H02 connected to the mobile station 41 belonging to the base station 51 having the base station ID of B02.
① A packet having the transmission-source address and the destination address of N00/H01 and N00/H02 is transmitted from the host 30.
② (In this case, it is assumed that a process such as that described above in the item (1) has been performed from the host 31 to the host 30 so that the address conversion table of the mobile station 40 has the base station ID B02 of the base station 51 to which the host 31 belongs, as shown in FIG. 4.) According to the address conversion table, the mobile station 40 replaces the base station ID field of the transmission-source address with the address B01 of the base station 50 to which the mobile station 40 belongs. On the other hand, the mobile station 40 replaces the base station ID field of the destination address by B02 which is ID of the base station 51 to which the destination host 31 belongs. Then, the mobile station 40 transfers the thus-obtained packet into the base station network 20.
③ The packet is transferred to the mobile station 41 which belongs to the base station 51 (B02) via the base station 51 of destination. Then, the mobile station 41 replaces the base station ID field of each of the transmission-source address and destination address with N00, and transfers the packet to the host 31 (H02).

### (3) A case where a base station to which a transmission-source host belongs is switched to another base station

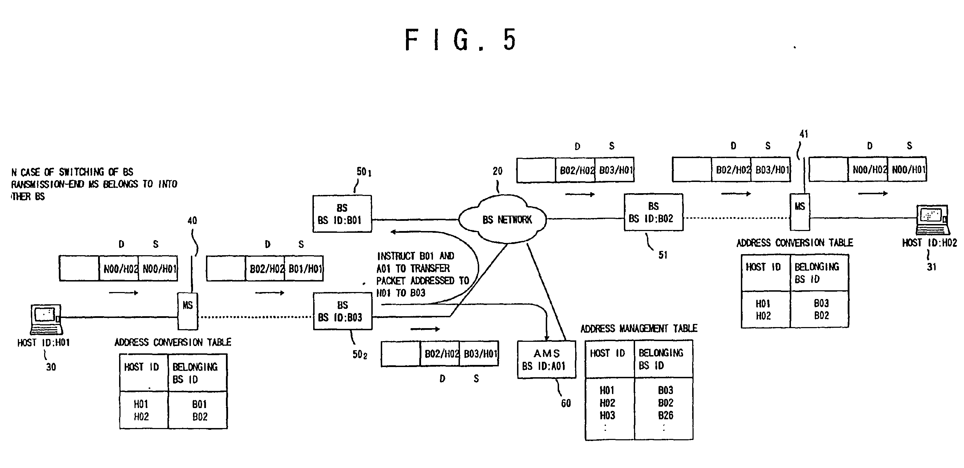

With reference to FIG. 5, a communication procedure in a case where a base station to which a transmission-source host belongs is switched to another base station will now be described.

A case where, during a process of transmitting a packet from the host 30 having the host ID of H01 connected to the mobile station 40 belonging to the base station 50₁ having the base station ID of B01 to the host 31 having the host ID of H02 connected to the mobile station 41 belonging to the base station 51 having the base station ID of B02, the base station to which the host 30 (H01) belongs is switched into a base station 50₂ (B03) will now be described.
① The mobile station 40, when converting the addresses, replaces the base station ID field of the transmission-source address with B01 which is the address of the original base station 50₁, and transmits the packet to the base station 50₂ (B03).
② The base station 50₂ (B03), receiving the packet,
   (i) replaces the base station ID field of the transmission-source address by B03 which is the address of its own, and transmits the packet to the base station network 20; and
   (ii) knows from the original contents of the base station ID field of the transmission-source address that the address of the base station 50₁ to which the host 30 originally belongs is B01, and transmits, to the base station 50₁, a packet instructing the base station 50₁ to transfer a transferred packet addressed to the host 30 (H01) to the base station 50₂ (B03). At the same time, also to the address management server 22, the base station 50₂ (B03) transmits a packet instructing the address management server 22 to update the base station to which the host 30 (H01) belongs into B03.
   ④ After that, the process same as that in the case of normal communication is executed.

### (4) A case where a base station to which a destination host belongs is switched to another base station

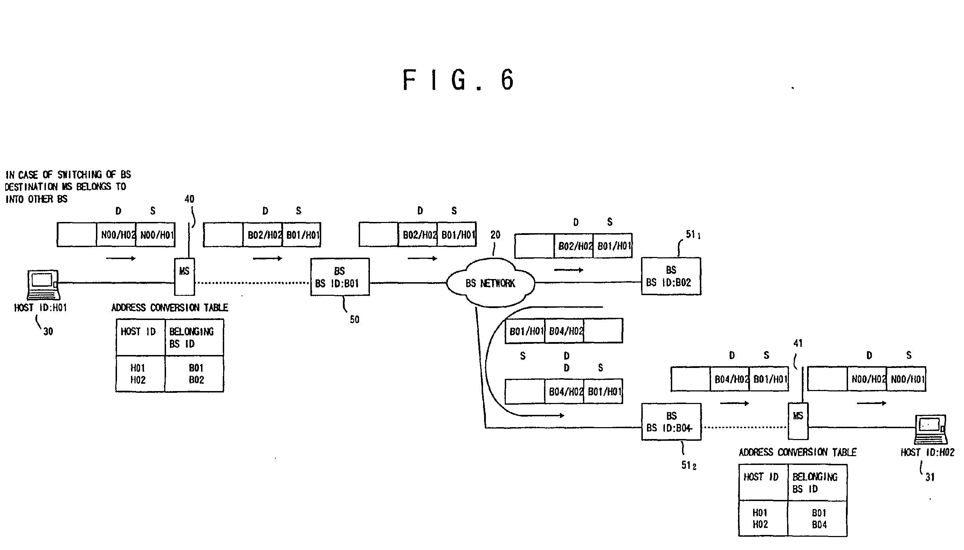

With reference to FIG. 6, a communication procedure in a case where a base station to which a destination host belongs is switched to another base station will now be described.

A case where, during a process of transmitting a packet from the host 30 having the host ID of H01 connected to the mobile station 40 belonging to the base station 50 having the base station ID of B01 to the host 31 having the host ID of H02 connected to the mobile station 41 belonging to the base station 51₁ having the base station ID of B02, the base station to which the host 31 (H02) belongs is switched into a base station 51₂ (B04) will now be described.
① In the manner same as that in the normal communication, the packet is transferred to the base station 51₁ (B02) via the base station network 20.
② The base station 50₁ (B02) previously receives instructions to transfer a packet addressed to the host 31 (H02) to the base station 51₂ (B04) when receiving the packet addressed to the host 31 (H02), when the base station to which the host 31 (H02) belongs is switched to the base station 51₂ (B04), then replaces the base station ID field of the destination address of the received packet with B04, and transfers the packet to the base station network 20.
③ After that, the process same as that in the normal communication is executed.

### 2. A case where a host on the other end of transmission is in an external IP network

(1) A case where a packet is transmitted from the host 30 having the host ID of H01 connected to the mobile station 40 belonging to the base station 50 having the base station ID of B01 to a host 37 in an external IP network 130 will now be described with reference to FIG. 7.
   ① A packet having the transmission-source address and destination address of N00/H01 and Hxx is transmitted from the host 30.
   ② The mobile station 40 first replaces the base station ID field of the transmission-source address with the address B01 to which the mobile station 40 belongs. On the other hand, when the destination host 37 is in the external IP network 130, the mobile station 40 does not change the destination address, and transmits the packet into the base station network 20.
   ③ In the base station network 20, when the destination of the packet is in the external IP network 130, the packet is transferred to the gateway station 21.
   ④ The gateway station 21 replaces the base station ID field of the transmission-source address by the fixed address N00, and transmits the packet into the external IP network 130.
(2) A communication procedure in a case where a packet transferred from an external IP network 130 and addressed to the host 31 having the host ID of H02 is transferred to the host 31 (H02) connected to the mobile station 41 belonging to the base station 51 having the base station ID of B02 will now be described with reference FIG. 8.
   ① The packet transferred from the external IP network 130 has the base station ID field of the destination address thereof replaced with B02 and is transmitted to the base station network 20 by the gateway station 21 according to the address management table.
   ② The packet is transferred to the mobile station 41 belonging to the destination base station 51 (B02) via the base station 51. Then, the mobile station 41 replaces the base station ID field of the destination address with the fixed address N00, and transfers the packet to the host 31 (H02).

Operations performed by a base station will now be described.
(1) Operations in a case where a radio packet from a mobile station is received
   (i) When the base station ID in the transmission-source address of the packet coincides with the address of the own station, the base station transfers the packet as it is to another base station, mobile station, the address management server or the like according to path control or routing control.
   (ii) When the base station ID in the transmission-source address of the packet does not coincide with the address of the own station, the base station replaces the base station ID with ID of the own station, and instructs the base station having the original ID to transfer a packet addressed to the transmission-source host of the above-mentioned packet to the current base station. Simultaneously, the base station instructs the address management server to update the address management table accordingly.
(2) Operations in a case where a packet from another base station or the like is received
   (i) When the base station ID of the destination address of the packet coincides with the address of the own station, and, also, no instructions of transfer has been given, the base station transmits the packet to the mobile station to which the destination host belongs.
   (ii) When the base station ID of the destination address of the packet coincides with the address of the own station, and, also, instructions of transfer has been given, the base station replaces the base station ID of the packet with ID of the base station which is the destination of the thus-instructed transfer, and transfers the packet.
   (iii) When the base station ID of the destination address of the packet does not coincide with the address of the own station, the base station transfers the packet to another base station according to path control or routing control.

Operations of a mobile station will now be described.
(1) The mobile station transfers a packet from a host to a base station. At this time, the mobile station replaces the base station ID field of the transmission-source address of the packet with ID of the base station to which the own station belongs, and replaces the base station ID field of the destination address with ID of the base station to which the mobile station to which the destination host is connected belongs.
   When the ID of the base station to which the mobile station to which the destination host is connected belongs is not known, the mobile station replaces the base station ID field of the destination address with ID of the address management server.
(2) The mobile station transfers a packet from a base station to a host. At this time, the mobile station returns the base station ID field of each of the destination address and transmission-source address of the packet into the original fixed number (FIXED: fixed address).
(3) In order to achieve the above-mentioned operations of (1) and (2), the mobile station detects and stores the correspondences in ID between the transmission-source and destination hosts and the base stations to which the hosts belong, respectively, and performs address conversion according thereto.

The address management server in the above description manages the correspondence between each host ID and the base station ID of the base station to which the mobile station to which the host having the host ID is connected belongs. The address management server updates the management data each time the base station to which the mobile station belongs is updated.

Although the above description is one for the example of the mobile radio communication system, the present invention may also be applied to a fixed wire communication system.

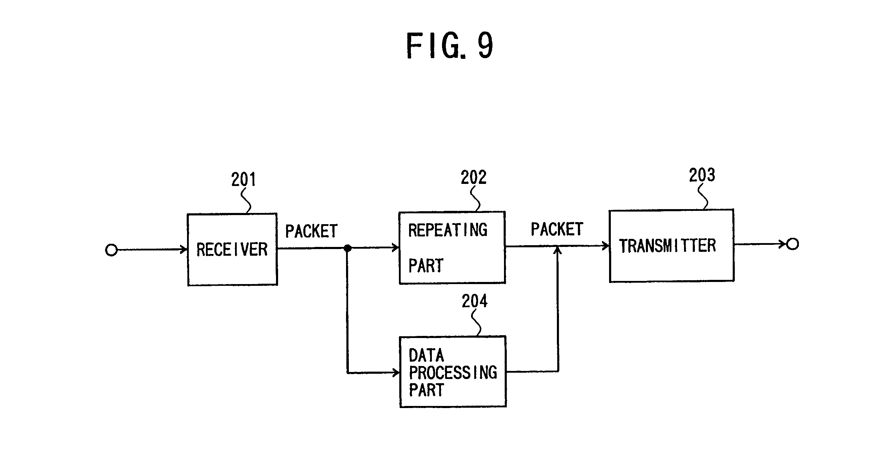

Each of the mobile stations, base stations, address management server and gateway station in the system described above according to the present invention may have a block configuration as shown in FIG. 9.

As shown in FIG. 9, each of the mobile stations, base stations, address management server and gateway station includes a receiver 201, a repeating part 202, a transmitter 203 and a data processing part 204. The receiver 201, repeating part 202 and transmitter 203 may be those well-known in the art employed by general repeaters used in a common communication networks. In a case of the gateway station, these parts further have functions of gateway well-known in the art used for linking two different types of networks, commonly.

The data processing part 204, which may include a CPU, a memory and other storage devices, as the need arises, performs the various operations of each of the mobile stations, base stations, address management server and gateway station described above with reference to FIGS. 2 through 8.

The present invention is not limited to the above-described embodiment, and variations and modifications may be made without departing from the scope of the present invention.

## Claims

1. A packet communication method employing a packet having a transmission-source address and a destination address, wherein a predetermined number of bits of the transmission-source address and a predetermined number of bits of the destination address of the packet are made predetermined addresses by a transmission-source terminal (30),
**characterized by** the steps of:
receiving at a repeating node (40) a packet from a transmission-source terminal (30);
converting at the repeating node (40) the predetermined address of the transmission-source address of the received packet into an address of a higher rank station (50; 50₂) of said repeating node;
converting at the repeating node (40) the predetermined address of the destination address of the received packet into an address of a node (22) having a table of an address of a higher-rank station of a last repeating node for each terminal, when the address of the higher-rank station of the last repeating node for the destination terminal is not known, or into the address of the higher-rank station (51;51₂) of a last repeating node (31) when it is known, and transferring the packet;
converting at the node (22) having the table of the address of the higher-rank station of the last repeating node for each terminal, in case it receives the packet from the repeating node (40), the own address in the destination address of the received packet into the address of the higher-rank station (51;51₂) of the last repeating node (41) for the destination terminal (31) and transferring the packet;
transferring from the higher-rank station (50;50₂) of the repeating node (40) the received packet without changing the transmission-source address when the address of the higher-rank station in the transmission-source address of the received packet coincides with the address of the own station, or
when the address of the higher-rank station in the transmission-source address of the received packet does not coincide with the address of the own station, transferring from the higher-rank station (50;502) of the repeating code (40) the received packet after converting the address of the higher-rank station in the transmission-source address of the received packet into the address of the own station,
instructing the higher-rank station having the transmission-source address originally written in the received packet to transfer a packet addressed to said transmission-source terminal (30) to the own station,
and further instructing the node (22) having the table of the address of the higher-rank station of the last repeating node for each terminal to update said table; and
receiving the packet at the higher-rank station (51; 51₂) of the last repeating node (41) for the destination terminal (31) and transferring it without changing the destination address when the address of the higher-rank station in the destination address coincides with the address of the own station and not transfer instructions are given for the destination terminal, or
when the address of the higher-rank station in the destination address of the received packet coincides with the address of the own station and instructions are given for the destination terminal, converting the address of the higher-rank station of the destination address of the received packet into an address of a higher-rank station of the destination of the instructed transfer and transferring the packet, or
when the address of the higher-rank station in the destination address of the received packet does not coincide with the address of the own station, transferring the packet.

2. The method as claimed in Claim 1, wherein, in a case where the destination terminal (37) belongs to another network (130),
the transmission-source terminal (30) transmits the packet having an address given to the destination terminal (37) as the destination address thereof;
the repeating node (40), which repeats the packet from the transmission-source terminal (30) first, converts the fixed address in the transmission-source address of the received packet into the address of the higher-rank station (50) of said repeating node, and transfers the packet to a gateway station (21) which provides an interface with the other network (130); and said gateway station converts the address of the higher-rank station of the received packet into the predetermined address, and transfers the packet into said other network.

3. The method as claimed in Claim 1or 2, wherein, in a case where the transmission-source terminal (38) belongs to another network (130),
said transmission-source terminal transmits the packet having an address given to the destination terminal (31) as the destination address thereof; and
a gateway station (21) which provides an interface with said other network converts the predetermined address in the destination address of the received packet into the address of the higher-rank station (51) of the last repeating node (41) for said destination terminal, and transfers the packet.

4. A packet communication system for packets having a transmission-source address and a destination address,
comprising a transmission-source terminal (30) for making a predetermined number of bits of the transmission-source address and a predetermined number of bits of the destination address of the packet predetermined addresses, having means for transferring the packet;
**characterized by**:
a repeating node (40), configured to repeat the packet from said transmission-source terminal, first converting the predetermined address of the transmission-source address of the received packet into an address of a higher-rank station (50;50₂) of said repeating node,
said repeating node also configured to convert the predetermined address of the destination address of the received packet into an address of a node (22) having a table of an address of a higher-rank station of a last repeating node for each terminal, when the address of the higher-rank station of the last repeating node for the destination terminal is not known, and when it is known, convert the predetermined address of the destination address of the received packet into an address of a higher-rank station (51;51₂) of a last repeating node (41) for a destination terminal (31), and to transfer the packet,
said node (22) having a table of an address of a higher-rank station of a last repeating node for each terminal is configured to convert the own address in the destination address of the received packet into the address of the higher-rank station (51; 51₂) of the last repeating node (41) for a destination terminal (31), and to transfer the packet,
said higher-rank station (50,50₂) of the repeating node (40), which repeats the packet from the transmission-source terminal (30), is configured to transfer the received packet without changing the transmission-source address when the address of the higher-rank station in the transmission-source address of the received packet coincides with the address of the own station, and
when the address of the higher-rank station in the transmission-source address of the received packet does not coincide with the address of the own station, to transfer the packet after converting the address of the higher-rank station in the transmission-source address of the received packet into the address of the own station, to further to instruct the higher-rank station having the transmission-source address originally written in the received packet to transfer a packet addressed to said transmission-side terminal (30) to the own station, and further to instruct a node (22) having the table of the address of the higher-rank station of the last repeating node for each terminal to update said table,
said higher-rank station (51;51₂) of the last repeating node (41) for the destination terminal (31) is configured to transfer the received packet without changing the destination address, when the address of the higher-rank station in the destination address coincides with the address of the own station and no transfer instructions are given for the destination terminal, and
to transfer the packet after converting the address of the higher-rank station of the destination address of the received packet into an address of a higher-rank station of the destination of the instructed transfer, when the address of the higher-rank station in the destination address of the received packet coincides with the address of the own station and transfer instructions are given for the destination terminal, and to transfer the packet, and
to transfer the packet, when the address of the higher-rank station in the destination address of the received packet does not coincide with the address of the own station.

5. The system as claimed in Claim 4, wherein, in a case where the destination terminal belongs to another network (130),
the transmission-side terminal (30) is configured to transmit the packet having an address given to the destination terminal (37) as the destination address thereof;
the repeating node (40), which repeats the packet from the transmission-side terminal first, is configured to convert the fixed address in the transmission-source address of the received packet into the address of the higher-rank station (50) of said repeating node, and to transfer the packet to a gateway station (21) which provides an interface with the other network; and
said gateway station is configured to convert the address of the higher-rank station of the received packet into the predetermined address, and to transfer the packet into said other network.

6. The system as claimed in Claim 4 or 5, wherein, in a case where the transmission-source terminal (38) belongs to another network (130),
said transmission-side terminal is configured to transmit the packet having an address given to the destination terminal (31) as the destination address thereof; and the system comprises:
a gateway station (21) for providing an interface with said other network to convert the fixed address in the destination address of the received packet into the address of the higher-rank station (51) of the last repeating node (41) for said destination terminal, and to transfer the packet.

7. The system as claimed in Claim 4, 5 or 6, in which the repeating node (40) comprises:
a repeating part (202) configured for repeating the packet from a transmission-source terminal (30) first, said packet having a predetermined number of bits of the transmission-source address and a predetermined number of bits of the destination address thereof made to be predetermined addresses;
a transferring part (203) for transferring the packet; and
an address converting part (202) configured for converting the predetermined address of the transmission-source address of the received packet into an address of a higher-rank station (50) of said repeating node (40),
said address converting part further being configured to convert the predetermined address of the destination address of the received packet into an address of a higher-rank station (51) of a last repeating node (41) for a destination terminal (31) of the packet.

8. A system as claimed in claim 7, wherein:
said address converting part is configured to convert the predetermined address of the destination address of the received packet into an address of the node (22) having a table of an address of a higher-rank station of a last repeating node for each terminal, when the address of the higher-rank station of the last repeating node for the destination terminal is not known. :

9. A system as claimed in any of Claims 4 to 8, in which the address converting part (204) of the said node (22) having a table of an address of a higher-rank station of a last repeating node for each terminal has a table of an address of a higher-rank station of a last repeating node for each terminal, for converting the own address in the destination address of a received packet into the address of the higher-rank station (51) of the last repeating node (41) for a destination terminal (31) of said packet.

10. A system as claimed in any of Claims 4 to 9, in which the address converting part (204) of the higher rank station (50) of the said repeating node is for converting an address of a higher-rank station in the transmission-source address of a received packet into an address of the own apparatus when the address of the higher-rank station in the transmission-source address of the received packet does not coincide with the address of the own apparatus, before being transferred through the transferring part; and
said transferring part (203) being for transferring the received packet without changing the transmission-source address through said address converting part when the address of the higher-rank station in the transmission-source address of the received packet coincides with the address of the own apparatus.

11. A system as claimed in Claim 10, further comprising an instructing part for instructing a higher-rank station (50) having the transmission-source address originally written in the received packet to transfer a packet addressed to said transmission-source terminal (30) to the own apparatus, when the address of the higher-rank station in the transmission-source address of the received packet does not coincide with the address of the own apparatus, and
further for instructing a node (22) having a table of an address of a higher-rank station of a last repeating node for each terminal to update said table accordingly.

12. The system as claimed in any of Claims 4 to 11, in which the address converting part (204) of the higher rank station (51) of the last repeating node is for converting an address of a higher-rank station of the destination address of a received packet into an address of a higher-rank station of a destination of instructed transfer, when the address of the higher-rank station in the destination address of the received packet coincides with the address of the own apparatus and transfer instructions are given for the destination terminal, before being transferred through a transferring part; and
said transferring part further being for transferring the received packet without changing the destination address through the address converting part, when the address of the higher-rank station in the destination address coincides with the address of the own apparatus and no transfer instructions are given for the destination terminal.

13. A system as claimed in any of Claims 4 to 12, in which the higher rank station (51) of the last repeating node comprises:
a determining part (204) for determining whether or not an address of a higher-rank station in the destination address of a received packet does not coincide with an address of the own apparatus; and
a transferring part (203) for transferring the packet, when the address of the higher-rank station in the destination address of the received packet does not coincide with the address of the own apparatus as a result of the determination result of said determining part.

14. A system as claimed in any of Claims 4 to 13, in which the last repeating node (41) comprises:
an address converting part (204) for converting addresses of higher-rank stations in transmission-source address and destination address of a received packet into fixed addresses;
the transferring part (203) being for transferring the packet to the destination terminal (31).

15. A system as claimed in any of Claims 4 to 14, in which the gateway station (21) for providing an interface between different networks comprises:
an address converting part (204) for converting an address of a higher-rank station of a received packet into a predetermined address;
the transferring part (203) being for transferring the packet into another network.

16. A system as claimed in any of Claims 4 to 15, in which the gateway station (21) for providing an interface between different networks, comprises:
an address converting part (204) converting a predetermined address in the destination address of a received packet into an address of a higher-rank station of a last repeating node for a destination terminal of the packet.

## Patentansprüche

1. Paketübertragungsverfahren, das ein Paket verwendet, welches eine Übertragungsquellen-Adresse und eine Zieladresse aufweist, wobei eine vorgegebene Anzahl von Bits der Übertragungsquellen-Adresse und eine vorgegebene Anzahl von Bits der Zieladresse des Pakets durch einen Übertragungsquellen-Terminal (30) zu vorgegebenen Adressen gemacht sind,
**gekennzeichnet durch** die Schritte:
Empfangen eines Pakets von einem Übertragungsquellen-Terminal (30) an einem Wiederholungsknoten (40);
Konvertieren am Wiederholungsknoten (40) der vorgegebenen Adresse der Übertragungsquellen-Adresse des empfangenen Pakets in eine Adresse einer höherrangigen Station (50; 50₂) des Wiederholungsknoten;
Konvertieren am Wiederholungsknoten (40) der vorgegebenen Adresse der Zieladresse des empfangenen Pakets in eine Adresse eines Knotens (22), der eine Tabelle einer Adresse eine höherrangige Station eines letzten Wiederholungsknotens für jeden Terminal aufweist, wenn die Adresse der höherrangigen Station des letzten Wiederholungsknotens für den Zielterminal unbekannt ist, oder in die Adresse der höherrangigen Station (51; 51₂) eines letzten Wiederholungsknotens (31), wenn sie bekannt ist, und das Übermitteln des Pakets;
Konvertieren an dem Knoten (22), der die Tabelle der Adresse der höherrangigen Station des letzten Wiederholungsknotens für jeden Terminal vorliegt, im Falle es ein Paket von dem Wiederholungsknoten (40) empfängt, der eigenen Adresse in der Zieladresse des empfangenen Pakets in die Adresse der höherrangigen Station (51; 51₂) des letzten Wiederholungsknotens (41) für den Zielterminal (31) und Übermitteln des Pakets;
Übermitteln des empfangenen Pakets von der höherrangigen Station (50; 50₂) des Wiederholungsknotens (40) ohne Änderung der Übertragungsquellen-Adresse, wenn die Adresse der höherrangigen Station in der Übertragungsquellen-Adresse des empfangenen Pakets mit der Adresse der eigenen Station übereinstimmt, oder,
wenn die Adresse der höherrangigen Station in der Übertragungsquellen-Adresse des empfangenen Pakets nicht mit der Adresse der eigenen Station übereinstimmt, Übermitteln des empfangenen Pakets von der höherrangigen Station (50; 50₂) des Wiederholungsknotens (40) nach dem Konvertieren der Adresse der höherrangigen Station in der Übertragungsquellen-Adresse des empfangenen Pakets in die Adresse der eigenen Station,
Instruieren der höherrangigen Station, die die Übertragungsquellen-Adresse, die original in dem empfangenen Paket eingeschrieben wurde, aufweist, um ein an den Übertragungsquellen-Terminal (30) adressiertes Paket an die eigene Station zu übermitteln,
und ferner Instruieren des Knotens (22), der die Tabelle der Adresse der höherrangigen Station des letzten Wiederholungsknotens für jeden Terminal aufweist, um die Tabelle zu aktualisieren; und
Empfangen des Pakets an der höherrangigen Station (51; 51₂) des letzten Wiederholungsknotens (41) für den Zielterminal (31) und sein Übermitteln ohne Änderung der Zieladresse, wenn die Adresse der höherrangigen Station in der Zieladresse mit der Adresse der eigenen Station übereinstimmt und
keine Übermittlungsinstruktionen für den Zielterminal gegeben sind, oder,
wenn die Adresse der höherrangigen Station in der Zieladresse des empfangenen Pakets mit der Adresse der eigenen Station übereinstimmt und Instruktionen für den Zielterminal gegeben sind, Konvertieren der Adresse der höherrangigen Station der Zieladresse des empfangenen Pakets in eine Adresse einer höherrangigen Station der Zielsetzung der instruierten Übermittlung und Übermitteln des Pakets, oder,
wenn die Adresse der höherrangigen Station in der Zieladresse des empfangenen Pakets nicht mit der Adresse der eigenen Station übereinstimmt, Übermitteln des Pakets.

2. Verfahren nach Anspruch 2, wobei für den Fall, dass der Zielterminal (37) einem anderen Netzwerk (130) angehört,
der Übertragungsquellen-Terminal (30) das Paket an eine ihm zur Verfügung stehende Adresse überträgt, die dem Zielterminal als Zieladresse zugeordnet ist;
der Wiederholungsknoten (40), welcher das Paket von dem Übertragungsquellen-Terminal (30) zuerst wiederholt, die feste Adresse in der Übertragungsquellen-Adresse des empfangenen Pakets in die Adresse der höherrangigen Station (50) des Wiederholungsknotens konvertiert, und das Paket zu einer Gateway-Station (21) übermittelt, welche eine Schnittstelle zu dem anderen Netzwerk (130) bereitstellt; und die Gateway-Station die Adresse der höherrangigen Station des empfangenen Pakets in die vorgegebene Adresse konvertiert, und das Paket in das andere Netzwerk übermittelt.

3. Verfahren nach Anspruch 1 oder 2, wobei für den Fall, dass der Übertragungsquellen-Terminal (38) einem anderen Netzwerk (130) angehört,
der Übertragungsquellen-Terminal das Paket an eine ihm zur Verfügung stehende Adresse übermittelt, die dem Zielterminal als Zieladresse zugeordnet ist;
eine Gateway-Station (21), welche eine Schnittstelle zu dem anderen Netzwerk bereitstellt, die vorgegebene Adresse in der Übertragungsquellen-Adresse des empfangenen Pakets in die Adresse der höherrangigen Station (51) des letzten Wiederholungsknotens (41) für den Zielterminal konvertiert, und das Paket übermittelt.

4. Paketübertragungssystem für Pakete mit einer Übertragungsquellen-Adresse und einer Zieladresse,
umfassend einen Übertragungsquellen-Terminal (30) zum Festlegen einer vorgegebenen Anzahl von Bits der Übertragungsquellen-Adresse und einer vorgegebenen Anzahl von Bits der Zieladresse des Pakets als vorgegebene Adressen, wobei Mittel zum Übermitteln des Pakets vorhanden sind;
**gekennzeichnet durch**:
einen Wiederholungsknoten (40), der zum Wiederholen der Pakete des Übertragungsquellen-Terminals konfiguriert ist, wobei zuerst die vorbestimmte Adresse der Übertragungsquellen-Adresse des empfangenen Pakets in eine Adresse einer höherrangigen Station (50; 50₂) des Wiederholungsknotens konvertiert wird,
wobei der Wiederholungsknoten auch zum Konvertieren der vorbestimmten Adresse der Zieladresse des empfangenen Pakets in eine Adresse eines Knotens (22) konfiguriert ist, der eine Tabelle einer Adresse einer höherrangigen Station eines letzten Wiederholungsknotens für jeden Terminal aufweist, wenn die Adresse der höherrangigen Station des letzten Wiederholungsknotens unbekannt ist, und wenn sie bekannt ist, zum Konvertieren der vorbestimmten Adresse der Zieladresse des empfangenen Pakets in eine Adresse einer höherrangigen Station (51; 51₂) eines letzten Wiederholungsknotens (41) für einen Zielterminal (31) und zum Übermitteln des Pakets,
wobei der Knoten (22), der eine Tabelle einer Adresse einer höherrangigen Station eines letzten Wiederholungsknotens für jeden Terminal aufweist, zum Konvertieren der eigenen Adresse in der Zieladresse des empfangenen Pakets in die Adresse der höherrangigen Station (51; 51₂) des letzten Wiederholungsknotens (41) für einen Zielterminal (31), und zum Übermitteln des Pakets konfiguriert ist,
wobei die höherrangige Station (50; 50₂) des Wiederholungsknotens (40), welche das Paket von dem Übertragungsquellen-Terminal (30) wiederholt, zum Übertragen des empfangenen Pakets ohne Änderung der Übertragungsquellen-Adresse konfiguriert ist, wenn die Adresse der höherrangigen Station in der Übertragungsquellen-Adresse des empfangenen Pakets mit der Adresse der eigenen Station übereinstimmt, und,
wenn die Adresse der höherrangigen Station in der Zieladresse des empfangenen Pakets nicht mit der Adresse der eigenen Station übereinstimmt, zum Übermitteln des Pakets nach dem Konvertieren der Adresse der höherrangigen Station in der Übertragungsquellen-Adresse des empfangenen Pakets in die Adresse der eigenen Station, zum ferner Instruieren der höherrangigen Station, die original in dem empfangenen Paket eingeschriebene Übertragungsquellen-Adresse aufweist, ein an den Übertragungsquellen-Terminal (30) adressiertes Paket zur eigenen Station zu übermitteln, und ferner zum Instruieren eines Knotens (22), der die Tabelle der Adresse der höherrangigen Station des letzten Wiederholungsknotens für jeden Terminal diese Tabelle zu aktualisieren,
wobei die höherrangige Station (51; 51₂) des letzten Wiederholungsknotens (41) für den Zielterminal (31) zum Übermitteln des empfangenen Pakets ohne Änderung der Zieladresse konfiguriert ist, wenn die Adresse der höherrangigen Station in der Zieladresse mit der Adresse der eigenen Station übereinstimmt und keine Übermittlungsanweisungen für den Zielterminal gegeben sind, und
zum Übermitteln des Pakets nach dem Konvertieren der Adresse der höherrangigen Station der Zieladresse des empfangenen Pakets in eine Adresse einer höherrangigen Station der Zielsetzung der instruierten Übermittlung, wenn die Adresse der höherrangigen Station in der Zieladresse des empfangenen Pakets mit der Adresse der eigenen Station übereinstimmt und Übermittlungsanweisungen für den Zielterminal gegeben sind und zum Übermitteln des Pakets, und
zum Übermitteln des Pakets, wenn die Adresse der höherrangigen Station in der Zieladresse des empfangenen Pakets nicht mit der Adresse der eigenen Station übereinstimmt.

5. System nach Anspruch 4, wobei im Fall, dass der Zielterminal einem anderen Netzwerk (130) angehört,
der Übertragungsquellen-Terminal (30) konfiguriert ist, um das Paket an eine ihm zur Verfügung stehende Adresse zu übertragen, die dem Zielterminal (37) als Zieladresse zugeordnet ist;
der Wiederholungsknoten (40), welcher die Pakete von dem Übertragungsquellen-Terminal (30) zuerst wiederholt, konfiguriert ist, um die feste Adresse in der Übertragungsquellen-Adresse des empfangenen Pakets in die Adresse der höherrangigen Station (50) des Wiederholungsknotens zu konvertieren, und das Paket zu einer Gateway-Station (21), welche eine Schnittstelle zu dem anderen Netzwerk (130) bereitstellt, zu übermitteln; und
die Gateway-Station konfiguriert ist, um die Adresse der höherrangigen Station des empfangenen Pakets in eine vorgegebene Adresse zu konvertieren, und das Paket in das andere Netzwerk zu übermitteln.

6. System nach Anspruch 4 oder 5, wobei im Fall, dass der Übertragungsquellen-Terminal (38) einem anderen Netzwerk (130) angehört,
der Übertragungsquellen-Terminal konfiguriert ist, um das Paket zu übermitteln, wobei eine Adresse vorliegt, die dem Zielterminal (31) als Zieladresse vorgegeben ist; und das System umfasst:
eine Gateway-Station (21) zum Bereitstellen einer Schnittstelle zum anderen Netzwerk, um die feste Adresse in der Zieladresse des empfangenen Pakets in die Adresse der höherrangigen Station (51) des letzten Wiederholungsknotens (41) für den Zielterminal zu konvertieren, und das Paket zu übermitteln.

7. System nach Anspruch 4, 5 oder 6, in welchem der Wiederholungsknoten (40) umfasst:
einen Wiederholungsteil (202) konfiguriert zum Wiederholen des Pakets von einem Übertragungsquellen-Terminal (30) zuerst, wobei das Paket als vorgegebene Adressen eine vorgegebene Anzahl von Bits der Übertragungsquellen-Adresse und eine vorgegebene Anzahl von Bits der Zieladresse aufweist;
einen Übermittlungsteil (203) zum Übermitteln des Pakets; und
einen Adress-Konvertierungsteil (202) konfiguriert zum Konvertieren der vorgegebenen Adresse der Übertragungsquellen-Adresse des empfangenen Pakets in eine Adresse einer höherrangigen Station (50) des letzten Wiederholungsknotens (40),
der Adress-Konvertierungsteil ferner zum Konvertieren der vorgegebenen Adresse der Zieladresse des empfangenen Pakets in eine Adresse einer höherrangigen Station (51) eines letzten Wiederholungsknotens (41) für einen Zielterminal (31) des Pakets konfiguriert ist.

8. System nach Anspruch 7, wobei:
der Adress-Konvertierungsteil konfiguriert ist, um die vorgegebene Adresse der Zieladresse des empfangenen Pakets in eine Adresse des Knotens (22) zu konvertieren, der eine Tabelle einer Adresse einer höherrangigen Station eines letzten Wiederholungsknotens für jeden Terminal aufweist, wenn die Adresse der höherrangigen Station des letzten Wiederholungsknotens für den Zielterminal unbekannt ist.

9. System nach einem der Ansprüche 4 bis 8, in welchem der Adress-Konvertienmgsteil (204) des Knotens (22), der eine Tabelle einer Adresse einer höherrangigen Station des letzten Wiederholungsknotens für jeden Terminal aufweist, eine Tabelle eine Adresse einer höherrangigen Station eines letzten Wiederholungsknoten für jeden Terminal aufweist, zum Konvertieren der eigenen Adresse in der Zieladresse eines empfangenen Pakets in die Adresse der höherrangigen Station (51) des letzten Wiederholungsknotens (41) für einen Zielterminal (31) des Pakets.

10. System nach einem der Ansprüche 4 bis 9, in welchem der Adress-Konvertierungsteil (204) der höherrangigen Station (50) des Wiederholungsknotens zum Konvertieren einer Adresse eine höherrangigen Station in der Übertragungsquellen-Adresse eines empfangenen Pakets in eine Adresse der eigenen Vorrichtung dient, wenn die Adresse der höherrangigen Station in der Übertragungsquellen-Adresse des empfangenen Pakets nicht mit der Adresse der eigenen Vorrichtung übereinstimmt, bevor es mittels des Übermittlungsteils übermittelt wird, und
der Übermittlungsteil (203) zum Übermitteln des empfangenen Pakets ohne Änderung der Übertragungsquellen-Adresse durch den Adress-Konvertierungsteil dient, wenn die Adresse der höherrangigen Station in der Übertragungsquellen-Adresse des empfangenen Pakets mit der Adresse der eigenen Vorrichtung übereinstimmt.

11. System nach Anspruch 10, ferner umfassend einen Instruktionsteil zum Instruieren einer höherrangigen Station (50), die die Übertragungsquellen-Adresse original in das empfangene Paket eingeschrieben aufweist, zum Übermitteln eines an den Übertragungsquellen-Terminal (30) adressierten Pakets zur eigenen Vorrichtung, wenn die Adresse der höherrangigen Station in der Übertragungsquellen-Adresse des empfangenen Pakets nicht mit der Adresse der eigenen Vorrichtung übereinstimmt, und
ferner zum Instruieren eines Knotens (22), der eine Tabelle einer Adresse einer höherrangigen Station eines letzten Wiederholungsknotens für jeden Terminal aufweist, zum entsprechenden Aktualisieren dieser Tabelle.

12. System nach einem der Ansprüche 4 bis 11, in welchem der Adress-Konvertierungsteil (204) der höherrangigen Station (51) des letzten Wiederholungsknotens zum Konvertieren einer Adresse einer höherrangigen Station in der Zieladresse eines empfangenen Pakets in eine Adresse eine höherrangigen Station einer Zielsetzung der instruierten Übermittlung dient, wenn die Adresse der höherrangigen Station in der Zieladresse des empfangenen Pakets mit der Adresse der eigenen Vorrichtung übereinstimmt und Übermittlungsanweisungen für den Zielterminal vorliegen, bevor es mittels des Übermittlungsteils übermittelt wird, und
der Übermittlungsteil ferner zum Übermitteln des empfangenen Pakets ohne Änderung der Zieladresse durch Adress-Konvertierungsteil dient, wenn die Adresse der höherrangigen Station in der Zieladresse mit der Adresse der eigenen Vorrichtung übereinstimmt und keine Übermittlungsanweisungen für den Zielterminal vorliegen.

13. System nach einem der Ansprüche 4 bis 12, in welchem die höherrangigen Station (51) des letzten Wiederholungsknotens umfasst:
einen Bestimmungsteil (204) zum Bestimmen, ob eine Adresse eine höherrangige Station in der Zieladresse eines empfangenen Pakets mit einer Adresse der eigenen Vorrichtung übereinstimmt oder nicht; und
einen Übermittlungsteil (203) zum Übermitteln des Pakets, wenn die Adresse der höherrangigen Station in der Zieladresse des empfangenen Pakets mit der Adresse der eigenen Vorrichtung, als Resultat der Bestimmung durch den Bestimmungsteil, nicht übereinstimmt.

14. System nach einem der Ansprüche 4 bis 13, in welchem der letzte Wiederholungsknoten (41) umfasst:
einen Adress-Konvertierungsteil (204) zum Konvertieren von Adressen von höherrangigen Stationen in der Übertragungsquellen-Adresse und der Zieladresse eines empfangenen Pakets in feste Adressen;
wobei der Übermittlungsteil (203) zum Übermitteln des Pakets zum Zielterminal (31) dient.

15. System nach einem der Ansprüche 4 bis 14, in welchem die Gateway-Station (21) zum Bereitstellen einer Schnittstelle zwischen verschiedenen Netzwerken umfasst:
einen Adress-Konvertierungsteil (204) zum Konvertieren einer Adresse einer höherrangigen Station eines empfangenen Pakets in eine vorbestimmte Adresse;
wobei der Übermittlungsteil (203) zum Übermitteln des Pakets zu einem anderen Netzwerk dient.

16. System nach einem der Ansprüche 4 bis 15, in welchem die Gateway-Station (21) zum Bereitstellen einer Schnittstelle zwischen verschiedenen Netzwerken umfasst:
einen Adress-Konvertierungsteil (204) zum Konvertieren einer vorbestimmten Adresse in der Zieladresse eines empfangenen Pakets in eine Adresse einer höherrangigen Station eines letzten Wiederholungsknotens für einen Zielterminal des Pakets.

## Revendications

1. Procédé de communication de paquets employant un paquet ayant une adresse source de transmission et une adresse de destination, dans lequel un nombre prédéterminé de bits de l'adresse source de transmission et un nombre prédéterminé de bits de l'adresse de destination du paquet sont faits être des adresses prédéterminées par un terminal source de transmission (30),
**caractérisé par** les étapes consistant à :
recevoir au niveau d'un noeud répéteur (40) un paquet provenant d'un terminal source de transmission (30) ;
convertir au niveau du noeud répéteur (40) l'adresse prédéterminée de l'adresse source de transmission du paquet reçu en une adresse d'une station de rang supérieur (50 ; 50₂) dudit noeud répéteur ;
convertir au niveau du noeud répéteur (40) l'adresse prédéterminée de l'adresse de destination du paquet reçu en une adresse d'un noeud (22) ayant une table d'une adresse d'une station de rang supérieur d'un dernier noeud répéteur pour chaque terminal, lorsque l'adresse de la station de rang supérieur du dernier noeud répéteur pour le terminal de destination n'est pas connue, ou en l'adresse de la station de rang supérieur (51 ; 51₂) d'un dernier noeud répéteur (31) lorsqu'elle est connue, et transférer le paquet ;
convertir au niveau du noeud (22) ayant la table de l'adresse de la station de rang supérieur du dernier noeud répéteur pour chaque terminal, dans le cas où il reçoit le paquet du noeud répéteur (40), la propre adresse dans l'adresse de destination du paquet reçu en l'adresse de la station de rang supérieur (51 ; 51₂) du dernier noeud répéteur (41) pour le terminal de destination (31) et transférer le paquet ;
transférer depuis la station de rang supérieur (50 ; 50₂) du noeud répéteur (40) le paquet reçu sans changer l'adresse source de transmission lorsque l'adresse de la station de rang supérieur dans l'adresse source de transmission du paquet reçu coïncide avec l'adresse de la propre station, ou
lorsque l'adresse de la station de rang supérieur dans l'adresse source de transmission du paquet reçu ne coïncide pas avec l'adresse de la propre station, transférer depuis la station de rang supérieur (50 ; 50₂) du noeud répéteur (40) le paquet reçu après avoir converti l'adresse de la station de rang supérieur dans l'adresse source de transmission du paquet reçu en l'adresse de la propre station,
donner pour instruction à la station de rang supérieur ayant l'adresse source de transmission écrite à l'origine dans le paquet reçu de transférer un paquet adressé audit terminal source de transmission (30) à la propre station,
et donner en outre pour instruction au noeud (22) ayant la table de l'adresse de la station de rang supérieur du dernier noeud répéteur pour chaque terminal de mettre à jour ladite table ; et
recevoir le paquet au niveau de la station de rang supérieur (51 ; 51₂) du dernier noeud répéteur (41) pour le terminal de destination (31) et le transférer sans changer l'adresse de destination lorsque l'adresse de la station de rang supérieur dans l'adresse de destination coïncide avec l'adresse de la propre station et qu'aucune instruction de transfert n'est donnée pour le terminal de destination, ou
lorsque l'adresse de la station de rang supérieur dans l'adresse de destination du paquet reçu coïncide avec l'adresse de la propre station et que des instructions sont données pour le terminal de destination, convertir l'adresse de la station de rang supérieur de l'adresse de destination du paquet reçu en une adresse d'une station de rang supérieur de la destination du transfert instruit et transférer le paquet, ou
lorsque l'adresse de la station de rang supérieur dans l'adresse de destination du paquet reçu ne coïncide pas avec l'adresse de la propre station, transférer le paquet.

2. Procédé tel que revendiqué dans la revendication 1, dans lequel, dans un cas où le terminal de destination (37) appartient à un autre réseau (130),
le terminal source de transmission (30) transmet le paquet ayant une adresse donnée au terminal de destination (37) comme son adresse de destination ;
le noeud répéteur (40), qui répète d'abord le paquet provenant du terminal source de transmission (30), convertit l'adresse fixée dans l'adresse source de transmission du paquet reçu en l'adresse de la station de rang supérieur (50) dudit noeud répéteur, et transfère le paquet à une station passerelle (21) qui fournit une interface avec l'autre réseau (130) ; et ladite station passerelle convertit l'adresse de la station de rang supérieur du paquet reçu en l'adresse prédéterminée, et transfère le paquet dans ledit autre réseau.

3. Procédé tel que revendiqué dans la revendication 1 ou 2, dans lequel, dans un cas où le terminal source de transmission (38) appartient à un autre réseau (130),
ledit terminal source de transmission (30) transmet le paquet ayant une adresse donnée au terminal de destination (31) comme son adresse de destination ; et
une station passerelle (21) qui fournit une interface avec ledit autre réseau convertit l'adresse prédéterminée dans l'adresse de destination du paquet reçu en l'adresse de la station de rang supérieur (51) du dernier noeud répéteur (41) pour ledit terminal de destination, et transfère le paquet.

4. Système de communication de paquets pour des paquets ayant une adresse source de transmission et une adresse de destination,
comprenant un terminal source de transmission (30) pour faire qu'un nombre prédéterminé de bits de l'adresse source de transmission et qu'un nombre prédéterminé de bits de l'adresse de destination du paquet soient des adresses prédéterminées, ayant des moyens pour transférer le paquet ;
**caractérisé par** :
un noeud répéteur (40), configuré pour répéter le paquet provenant dudit terminal source de transmission, convertissant d'abord l'adresse prédéterminée de l'adresse source de transmission du paquet reçu en une adresse d'une station de rang supérieur (50 ; 50₂) dudit noeud répéteur,
ledit noeud répéteur également configuré pour convertir l'adresse prédéterminée de l'adresse de destination du paquet reçu en une adresse d'un noeud (22) ayant une table d'une adresse d'une station de rang supérieur d'un dernier noeud répéteur pour chaque terminal, lorsque l'adresse de la station de rang supérieur du dernier noeud répéteur pour le terminal de destination n'est pas connue, et lorsqu'elle est connue, convertir l'adresse prédéterminée de l'adresse de destination du paquet reçu en une adresse d'une station de rang supérieur (51 ; 51₂) d'un dernier noeud répéteur (41) pour un terminal de destination (31), et pour transférer le paquet,
ledit noeud (22) ayant une table d'une adresse d'une station de rang supérieur d'un dernier noeud répéteur pour chaque terminal est configuré pour convertir la propre adresse dans l'adresse de destination du paquet reçu en l'adresse de la station de rang supérieur (51 ; 51₂) du dernier noeud répéteur (41) pour un terminal de destination (31), et pour transférer le paquet,
ladite station de rang supérieur (50 ; 50₂) du noeud répéteur (40), qui répète le paquet provenant du terminal source de transmission (30), est configurée pour transférer le paquet reçu sans changer l'adresse source de transmission lorsque l'adresse de la station de rang supérieur dans l'adresse source de transmission du paquet reçu coïncide avec l'adresse de la propre station, et
lorsque l'adresse de la station de rang supérieur dans l'adresse source de transmission du paquet reçu ne coïncide pas avec l'adresse de la propre station, pour transférer le paquet après avoir converti l'adresse de la station de rang supérieur dans l'adresse source de transmission du paquet reçu en l'adresse de la propre station, pour donner en outre pour instruction à la station de rang supérieur ayant l'adresse source de transmission écrite à l'origine dans le paquet reçu de transférer un paquet adressé audit terminal côté transmission (30) à la propre station, et pour donner en outre pour instruction à un noeud (22) ayant la table de l'adresse de la station de rang supérieur du dernier noeud répéteur pour chaque terminal de mettre à jour ladite table,
ladite station de rang supérieur (51 ; 51₂) du dernier noeud répéteur (41) pour le terminal de destination (31) est configurée pour transférer le paquet reçu sans changer l'adresse de destination, lorsque l'adresse de la station de rang supérieur dans l'adresse de destination coïncide avec l'adresse de la propre station et qu'aucune instruction de transfert n'est donnée pour le terminal de destination, et
pour transférer le paquet après avoir converti l'adresse de la station de rang supérieur de l'adresse de destination du paquet reçu en une adresse d'une station de rang supérieur de la destination du transfert instruit, lorsque l'adresse de la station de rang supérieur dans l'adresse de destination du paquet reçu coïncide avec l'adresse de la propre station et que des instructions de transfert sont données pour le terminal de destination, et pour transférer le paquet, et
pour transférer le paquet, lorsque l'adresse de la station de rang supérieur dans l'adresse de destination du paquet reçu ne coïncide pas avec l'adresse de la propre station.

5. Système tel que revendiqué dans la revendication 4, dans lequel, dans un cas où le terminal de destination appartient à un autre réseau (130),
le terminal côté transmission (30) est configuré pour transmettre le paquet ayant une adresse donnée au terminal de destination (37) comme son adresse de destination ;
le noeud répéteur (40), qui répète d'abord le paquet provenant du terminal côté transmission, est configuré pour convertir l'adresse fixée dans l'adresse source de transmission du paquet reçu en l'adresse de la station de rang supérieur (50) dudit noeud répéteur, et pour transférer le paquet à une station passerelle (21) qui fournit une interface avec l'autre réseau ; et
ladite station passerelle est configurée pour convertir l'adresse de la station de rang supérieur du paquet reçu en l'adresse prédéterminée, et pour transférer le paquet dans ledit autre réseau.

6. Système tel que revendiqué dans la revendication 4 ou 5, dans lequel, dans un cas où le terminal source de transmission (38) appartient à un autre réseau (130),
ledit terminal côté transmission est configuré pour transmettre le paquet ayant une adresse donnée au terminal de destination (31) comme son adresse de destination ; et le système comprend :
une station passerelle (21) qui fournit une interface avec ledit autre réseau pour convertir l'adresse fixée dans l'adresse de destination du paquet reçu en l'adresse de la station de rang supérieur (51) du dernier noeud répéteur (41) pour ledit terminal de destination, et pour transférer le paquet.

7. Système tel que revendiqué dans la revendication 4, 5 ou 6, dans lequel le noeud répéteur (40) comprend :
une partie de répétition (202) configurée pour répéter d'abord le paquet provenant d'un terminal source de transmission (30), ledit paquet ayant un nombre prédéterminé de bits de l'adresse source de transmission et un nombre prédéterminé de bits de l'adresse de destination de celui-ci faits être des adresses prédéterminées ;
une partie de transfert (203) pour transférer le paquet ; et
une partie de conversion d'adresse (202) configurée pour convertir l'adresse prédéterminée de l'adresse source de transmission du paquet reçu en une adresse d'une station de rang supérieur (50) dudit noeud répéteur (40),
ladite partie de conversion d'adresse étant en outre configurée pour convertir l'adresse prédéterminée de l'adresse de destination du paquet reçu en une adresse d'une station de rang supérieur (51) d'un dernier noeud répéteur (41) pour un terminal de destination (31) du paquet.

8. Système tel que revendiqué dans la revendication 7, dans lequel :
ladite partie de conversion d'adresse est configurée pour convertir l'adresse prédéterminée de l'adresse de destination du paquet reçu en une adresse du noeud (22) ayant une table d'une adresse d'une station de rang supérieur d'un dernier noeud répéteur pour chaque terminal, lorsque l'adresse de la station de rang supérieur du dernier noeud répéteur pour le terminal de destination n'est pas connue.

9. Système tel que revendiqué dans l'une quelconque des revendications 4 à 8, dans lequel la partie de conversion d'adresse (204) dudit noeud (22) ayant une table d'une adresse d'une station de rang supérieur d'un dernier noeud répéteur pour chaque terminal a une table d'une adresse d'une station de rang supérieur d'un dernier noeud répéteur pour chaque terminal, pour convertir la propre adresse dans l'adresse de destination d'un paquet reçu en l'adresse de la station de rang supérieur (51) du dernier noeud répéteur (41) pour un terminal de destination (31) dudit paquet.

10. Système tel que revendiqué dans l'une quelconque des revendications 4 à 9, dans lequel la partie de conversion d'adresse (204) de la station de rang supérieur (50) dudit noeud répéteur est destinée à convertir une adresse d'une station de rang supérieur dans l'adresse source de transmission d'un paquet reçu en une adresse du propre appareil lorsque l'adresse de la station de rang supérieur dans l'adresse source de transmission du paquet reçu ne coïncide pas avec l'adresse du propre appareil, avant d'être transféré par l'intermédiaire de la partie de transfert ; et
ladite partie de transfert (203) étant destinée à transférer le paquet reçu sans changer l'adresse source de transmission par l'intermédiaire de ladite partie de conversion d'adresse lorsque l'adresse de la station de rang supérieur dans l'adresse source de transmission du paquet reçu coïncide avec l'adresse du propre appareil.

11. Système tel que revendiqué dans la revendication 10, comprenant en outre une partie d'instruction pour donner pour instruction à une station de rang supérieur (50) ayant l'adresse source de transmission écrite à l'origine dans le paquet reçu de transférer un paquet adressé audit terminal source de transmission (30) au propre appareil, lorsque l'adresse de la station de rang supérieur dans l'adresse source de transmission du paquet reçu ne coïncide pas avec l'adresse du propre appareil, et
en outre pour donner pour instruction à un noeud (22) ayant une table d'une adresse d'une station de rang supérieur d'un dernier noeud répéteur pour chaque terminal de mettre à jour ladite table en conséquence.

12. Système tel que revendiqué dans l'une quelconque des revendications 4 à 11, dans lequel la partie de conversion d'adresse (204) de la station de rang supérieur (51) du dernier noeud répéteur est destinée à convertir une adresse d'une station de rang supérieur de l'adresse de destination d'un paquet reçu en une adresse d'une station de rang supérieur d'une destination de transfert instruit, lorsque l'adresse de la station de rang supérieur dans l'adresse de destination du paquet reçu coïncide avec l'adresse du propre appareil et que des instructions de transfert sont données pour le terminal de destination, avant d'être transféré par l'intermédiaire d'une partie de transfert ; et
ladite partie de transfert étant en outre destinée à transférer le paquet reçu sans changer l'adresse de destination par l'intermédiaire de la partie de conversion d'adresse, lorsque l'adresse de la station de rang supérieur dans l'adresse de destination coïncide avec l'adresse du propre appareil et qu'aucune instruction de transfert n'est donnée pour le terminal de destination.

13. Système tel que revendiqué dans l'une quelconque des revendications 4 à 12, dans lequel la station de rang supérieur (51) du dernier noeud répéteur comprend :
une partie de détermination (204) pour déterminer si oui ou non une adresse d'une station de rang supérieur dans l'adresse de destination d'un paquet reçu ne coïncide pas avec une adresse du propre appareil ; et
une partie de transfert (203) pour transférer le paquet, lorsque l'adresse de la station de rang supérieur dans l'adresse de destination du paquet reçu ne coïncide pas avec une adresse du propre appareil suite au résultat de la détermination de ladite partie de détermination.

14. Système tel que revendiqué dans l'une quelconque des revendications 4 à 13, dans lequel le dernier noeud répéteur (41) comprend :
une partie de conversion d'adresse (204) pour convertir des adresses de stations de rand supérieur dans l'adresse source de transmission et l'adresse de destination d'un paquet reçu en adresses fixées ;
la partie de transfert (203) étant destinée à transférer le paquet au terminal de destination (31).

15. Système tel que revendiqué dans l'une quelconque des revendications 4 à 14, dans lequel la station passerelle (21) pour fournir une interface entre différents réseaux comprend :
une partie de conversion d'adresse (204) pour convertir une adresse d'une station de rang supérieur d'un paquet reçu en une adresse prédéterminée ;
la partie de transfert (203) étant destinée à transférer le paquet dans un autre réseau.

16. Système tel que revendiqué dans l'une quelconque des revendications 4 à 15, dans lequel la station passerelle (21) pour fournir une interface entre différents réseaux comprend :
une partie de conversion d'adresse (204) convertissant une adresse prédéterminée dans l'adresse de destination d'un paquet reçu en une adresse d'une station de rang supérieur d'un dernier noeud répéteur pour un terminal de destination du paquet.
